(19)

Europäisches
Patentamt
European
Patent Office
Office européen
des brevets

(11) **EP 2 333 625 A2**

(12) **EUROPEAN PATENT APPLICATION**

(43) Date of publication:
**15.06.2011 Bulletin 2011/24**

(51) Int Cl.:
***G05B 19/19*** *(2006.01)*

(21) Application number: **10193301.8**

(22) Date of filing: **01.12.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.12.2009 JP 2009278179**

(71) Applicant: **Canon Kabushiki Kaisha
Tokyo 146-8501 (JP)**

(72) Inventor: **Ueda, Shinji
Tokyo 146-8501 (JP)**

(74) Representative: **TBK
Bavariaring 4-6
80336 München (DE)**

(54) **Positioning control apparatus and machine tool**

(57)    The positioning control apparatus includes a first motor (41) moving a first driven member (43), a second motor (45) moving a second driven member (47) and a controller (30-33) controlling the first and second motors so as to move the first and second driven members respectively to first and second target positions. The controller obtains a first moving time required for the first motor to move the first driven member to the first target position and a second moving time required for the second motor to move the second driven member to the second target position, and causes the first and second motors to concurrently operate during one of the first and second moving times longer than the other to move the first and second driven members respectively to the first and second target positions.

FIG. 3

**Description**

BACKGROUND OF THE INVENTION

Field of the Invention

The present invention relates to a positioning control apparatus.

Description of the Related Art

Machine tools such as laser drilling machines, laser trimmer apparatuses and laser repairing apparatuses use a Galvano motor that performs rotational positioning of a mirror which reflects a laser beam. Such machine tools further use a capacitance sensor, an optical encoder or a magnetic encoder to detect a rotation angle of the mirror so as to improve accuracy of the rotational positioning thereof. In addition, for example, the laser drilling machine uses plural mirrors and plural Galvano motors, and operates these Galvano motors at high speeds to move a laser irradiation point to a target position. Then, the laser drilling machine performs laser irradiation after completion of operation of all the motors (that is, after completion of the rotational positioning of the mirrors).
Moreover, other machine tools such as semiconductor exposure apparatuses and drill boring machines use an XY stage that is driven by biaxial linear motors. These machine tools operate the linear motors at high speeds to move the stage to a target position, and perform exposure or boring after completion of operation of all the linear motors (that is, after completion of the positioning of the stage).
In order to perform high-speed operation of the motor, rapid acceleration and rapid deceleration of the motor are needed, which requires supply of a large electric current to the motor. The supply of such a large electric current to the motor increases heat generation in the motor, which may excessively raise temperature of the motor and temperature of a circuit that supplies the electric current to the motor. Japanese Paten Laid-Open No. 2003-329960 discloses a motor controlling method that provides a waiting time to a movement instruction to suppress heat generation in a motor.
However, providing such a waiting time before a movement instruction as the method disclosed in Japanese Paten Laid-Open No. 2003-329960 is disadvantageous in terms of throughput of a process such as machining or the like.

SUMMARY OF THE INVENTION

The present invention provides, for example, a positioning control apparatus advantageous in terms of throughput.
The present invention in its first aspect provides a positioning control apparatus as specified in claims 1 to 3.
The present invention in its second aspect provides a machine tool as specified in claim 4.
Further features of the present invention will become apparent from the following description of exemplary embodiments with reference to the attached drawings.

BRIEF DESCRIPTION OF THE DRAWINGS

FIG. 1 is a flowchart showing operation of a positioning control apparatus that is Embodiment 1 of the present invention.
FIG. 2 shows a configuration of electric current amplifiers in the positioning control apparatus of Embodiment 1.
FIG. 3 shows a configuration of the positioning control apparatus of Embodiment 1.
FIG. 4 shows time response waveforms of a motor current under Condition 1 in Embodiment 1.
FIGS. 5A and 5B show position error waveforms under Condition 1 in Embodiment 1.
FIGS. 6A and 6B respectively show motor power consumption and average motor power consumption under Condition 1 in Embodiment 1.
FIGS. 7A and 7B respectively show amplifier power consumption and average amplifier power consumption under Condition 1 in Embodiment 1.
FIG. 8 shows a motor electric current waveform under Condition 2 in Embodiment 1.
FIGS. 9A and 9B respectively show position error waveforms under Condition 2 in Embodiment 1.
FIGS. 10A and 10B respectively show motor power consumption and average motor power consumption under Condition 2 in Embodiment 1.
FIGS. 11A and 11B respectively show amplifier power consumption and average amplifier power consumption under Condition 2 in Embodiment 1.
FIG. 12 shows a laser beam machining apparatus as a machine tool that is Embodiment 2 of the present invention.

DESCRIPTION OF THE EMBODIMENTS

Exemplary embodiments of the present invention will hereinafter be described with reference to the accompanying drawings.

First Embodiment

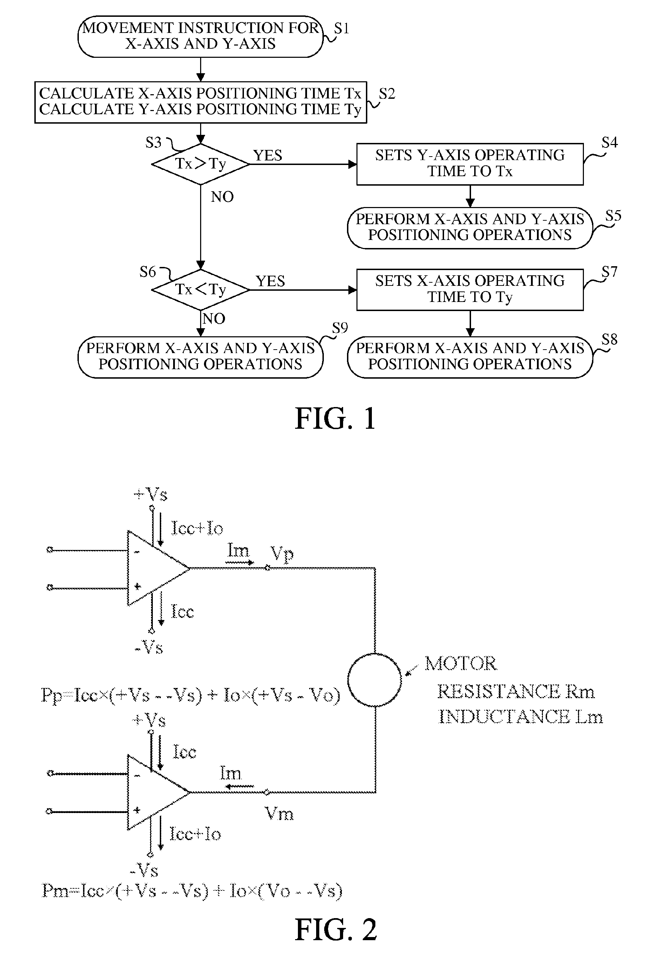

A flowchart of FIG. 1 shows operation of a positioning control apparatus that is a first embodiment (Embodiment 1) of the present invention. Description will hereinafter be made of a case where the apparatus operates two motors (first and second motors) to control positions of first and second driven members (not shown) in X-axis and Y-axis directions (first and second directions). The first and second driven members are, for example, two mirrors in a laser beam machining apparatus or X-axis and Y-axis driven parts of an XY stage in a semiconductor exposure apparatus. The first and second driven members may be members different from or same as each other. The motor moving the first driven member in the X-axis direction and the motor moving the second driven member in the Y-axis direction are hereinafter respectively referred to as the "X-axis motor" and the "Y-axis motor".

First at step S1, the apparatus instructs target positions (first and second target positions) in the X-axis and Y-axis directions, respectively.

Next at step S2, the apparatus calculates a positioning time (first moving time) Tx of the X-axis motor required for movement of the first driven member to the target position in the X-axis direction. Moreover, the apparatus calculates a positioning time (second moving time) Ty of the Y-axis motor required for movement of the second driven member to the target position in the Y-axis direction. The positioning time Tx and the positioning time Ty are hereinafter respectively referred to as the "X-axis positioning time Tx" and the "Y-axis positioning time Ty".

If the X-axis positioning time Tx is longer than the Y-axis positioning time Ty (Tx>Ty) at step S3, the apparatus sets at step S4 an actual moving time for the X-axis and Y-axis motors to a time corresponding to, that is, equal to the X-axis positioning time Tx which is a longer one of the positioning times Tx and Ty than the other. In other words, the apparatus sets the actual moving time for the Y-axis motor to a time longer than the Y-axis positioning time Ty. Then, the apparatus concurrently (or simultaneously) operates at step S5 the X-axis and Y-axis motors in the actual moving time Tx. Thus, the movements of the first and second driven members to the respective target positions are completed at the same time.

Moreover, if the Y-axis positioning time Ty is longer than the X-axis positioning time Tx (Ty>Tx) at step S6, the apparatus sets at step S7 the actual moving time for the X-axis and Y-axis motors to a time corresponding to the Y-axis positioning time Ty which is a longer one of the positioning times Tx and Ty than the other. In other words, the apparatus sets the actual moving time for the X-axis motor to a time longer than the X-axis positioning time Tx. Then, the apparatus concurrently operates as step S8 the X-axis and Y-axis motors in the actual moving time Ty. Thus, the movements of the first and second driven members to the respective target positions are completed at the same time.

The terms "concurrently", "simultaneously" and "at the same time" used in this embodiment include not only a case where stating times of the operations of the motors and finishing times thereof respectively coincide with each other but also a case where a delay of control or processing causes a slight difference that can be regarded as no difference between the stating times or the finishing times.

When the X-axis positioning time Tx is equal to the Y-axis positioning time Ty at step S9, the apparatus concurrently operates the X-axis and Y-axis motors in the actual moving time Tx (=Ty). Thereby, the movements of the first and second driven members to the respective target positions are completed at the same time.

The above-described operation enables reduction of power consumption in the X-axis and Y-axis motors, which results in suppression of heat generation in these motors. Specific description thereof will hereinafter be made.

In this embodiment, the X-axis and Y-axis motors are constituted by Galvano motors (single-phase motors). Resistance of each motor is denoted by $R_M[\Omega]$, and inductance thereof is denoted by $L_M[H]$.

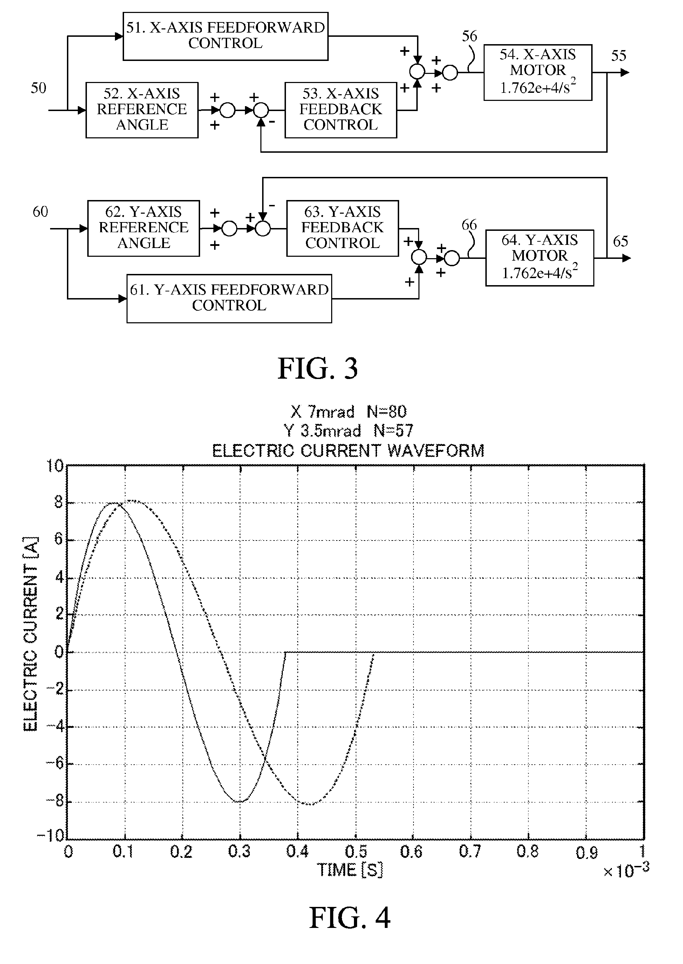

FIG. 3 shows a configuration of a biaxial Galvano motor positioning control apparatus of this embodiment. Reference numeral 50 denotes a target angle for the X-axis motor 54 which is input to the positioning control apparatus from an outside thereof. The target angle of the X-axis motor 54 is a rotation angle required for movement of the first driven member to the target position in the X-axis direction.

Reference numeral 51 denotes an X-axis feedforward controlling block that performs feedforward control for the X-axis motor 54. Reference numeral 52 denotes a reference angle for the X-axis motor 54 which is set to a value corresponding to an angular response obtained from a motor model into which an electric current addition term of the X-axis feedforward control is input. Reference numeral 53 denotes an X-axis feedback controlling block that performs feedback control for the X-axis motor 54. Reference numeral 55 denotes a rotation angle as output of the X-axis motor 54. Reference numeral 56 denotes an electric current (hereinafter referred to as a "motor current") to be supplied to the X-axis motor 54.

Reference numeral 60 denotes a target angle of the Y-axis motor 64 which is input to the positioning control apparatus from the outside. The target angle of the Y-axis motor 64 is a rotation angle required for movement of the second driven member to the target position in the Y-axis direction.

Reference numeral 61 denotes a Y-axis feedforward controlling block that performs feedforward control for the Y-axis motor 64. Reference numeral 62 denotes a reference angle for the Y-axis motor 64 which is set to a value corresponding to an angular response obtained from a motor model into which an electric current addition term of the Y-axis feedforward control is input. Reference numeral 63 denotes a Y-axis feedback controlling block that performs feedback control for the Y-axis motor 64. Reference numeral 65 denotes a rotation angle as output of the Y-axis motor 64. Reference numeral 66 denotes an electric current (hereinafter referred to as a "motor current") to be supplied to the Y-axis motor 64.

The X-axis and Y-axis feedforward controlling blocks 51 and 61 and the X-axis and Y-axis feedback controlling blocks 53 and 63 constitute a controller.

This embodiment employs a simple motor model of the X-axis motor 54. The motor model has a transfer function whose response in angle [rad] in an encoder (not shown) with respect to a motor current [A] is $1.762e+4/s^2$. The encoder is provided in a feedback loop from output of the X-axis motor 54 to input of the X-axis feedback controlling block 53. The driven member (for example, a mirror in a laser beam machining apparatus) is attached to an output shaft of the motor. The output shaft of the motor and the driven member have a mechanical resonance mode. However, in this description, for simplification, each of the driven member and the motor is assumed to be formed as a rigid member in which torsional deformation is not caused by its rotational motion. In addition, the positioning control apparatus of this embodiment employs a two-degree-of-freedom digital control system.

The electric current addition term of the X-axis feedforward control in the two-degree-of-freedom control system is designed with a so-called jerk minimizing trajectory by final-state control. As described above, the reference angle for the X-axis is set to a value corresponding to the angular response obtained from the motor model into which the electric current addition term of the X-axis feedforward control is input. Accordingly, the X-axis feedback control does not function when the motor model is coincident with an actual motor. The following description will be made on assumption that the motor model is coincident with the actual motor. The above-description of the X-axis motor is similarly applied to the Y-axis motor.

The final-state control, which is described in detail in "Nano-scale servo control" (Tokyo Electrical Engineering College Publications Service, pages 174 to 178) is a control method that provides input to a controlled object to bring an initial state of the system to a specified final (terminal) state in a finite time period.

The model of the motor that is the controlled object is defined as a controllable mth-order discrete time system as follows:

$$x[k+1]=Ax[k]+Bu[k].$$

When a final step number N is assumed to be N≥m, control inputs u[0], u[1],...,and u[N-1] enable movement of the controlled object from the initial state x[0] to the final state x[N].

In this embodiment, the model of the motor as the controlled object is converted from a transfer function model to a discrete time system model, and instruction of the motor current (hereinafter referred to as a "motor current instruction") is designed with the jerk minimizing trajectory in which a sum of first-order differential values of acceleration of the motor is minimized. The X-axis motor and the Y-axis motor are hereinafter simply referred to as the "X-axis" and the "Y-axis", respectively.

(Condition 1 relating to control laws)

An example will be described in which the positioning of the X-axis at an angular position corresponding to an angular movement amount of 7e-3rad and the positioning of the Y-axis at an angular position corresponding to an angular movement amount of 3.5e-3rad are performed. A combination of the following control laws is referred to as Condition 1.

The movement (operation) of the X-axis is performed according to the following values:

    initial state angular position x[0]=0rad;
    final state angular position x[N]=7e-3rad;
    sampling frequency=150KHz; and
    final step number N=80.

The final step number means a number of sampling times to bring the X-axis from the initial state to the final state.

The movement of the Y-axis is performed according to the following values:

initial state angular position x[0]=0rad;
final state angular position x[N]=3.5e-3rad;
sampling frequency=150KHz; and
final step number N=57.

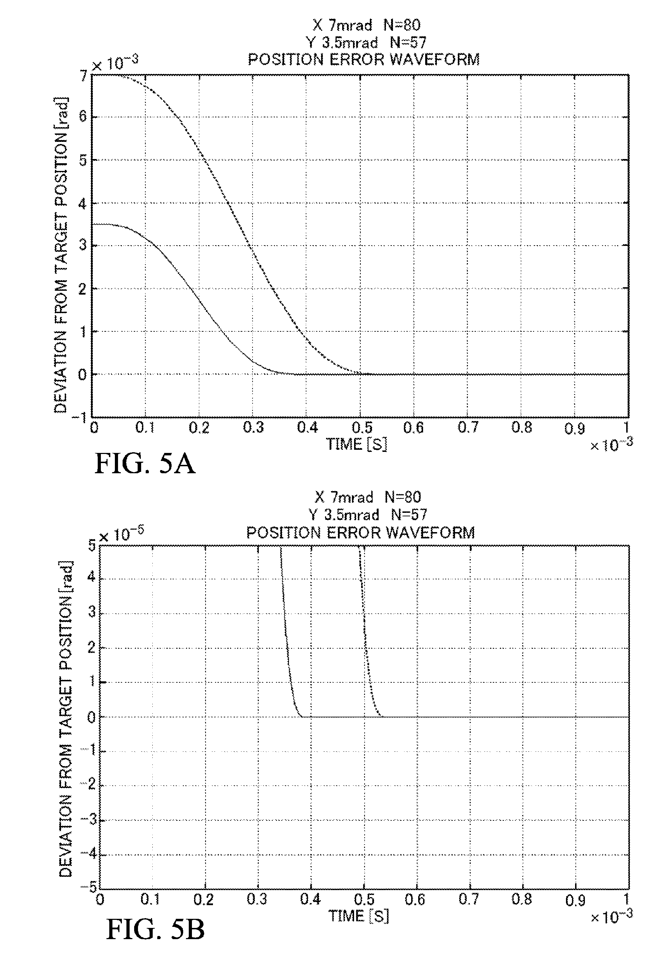

FIG. 4 shows time response waveforms of the motor currents of the X-axis and the Y-axis from a starting time of their movements to a finishing time at their target positions. The time response waveform of the X-axis is shown by a dotted line, and the time response waveform of the Y-axis is shown by a solid line. Moreover, FIG. 5A shows position error waveforms of the X-axis and the Y-axis from the starting time to the finishing time, and FIG. 5B shows enlarged parts of the position error waveforms in the vicinity of the target positions. The position error waveform of the X-axis is shown by a dotted line, and the position error waveform of the Y-axis is shown by a solid line. In FIGS. 5A and 5B, the horizontal axis shows time [10$^{-3}$ sec] and the vertical axis shows difference (deviation) of a current position from the target position.

When positioning precision required in the X-axis and the Y-axis is 20$\mu$rad, the X-axis and Y-axis positioning times Tx and Ty required for the movement at such positioning precision are, as shown in FIG. 5B:

$$\mathtt{Tx=500\mu sec}$$

$$\mathtt{Ty=350\mu sec.}$$

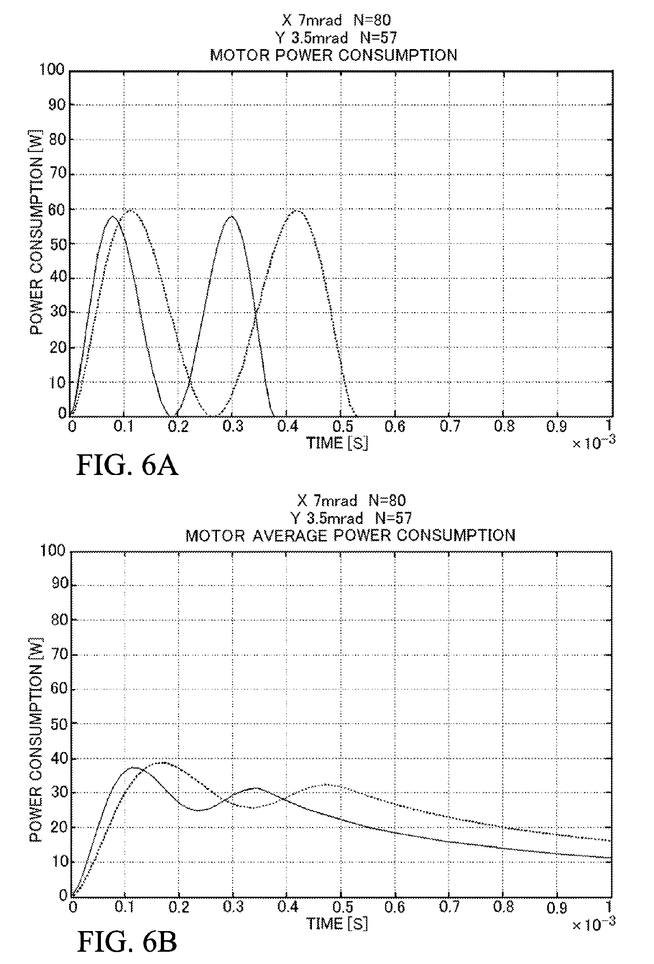

FIG. 6A shows power consumptions of the X-axis and Y-axis motors. The power consumption of the X-axis is shown by a dotted line, and the power consumption of the Y-axis is shown by a solid line. The power consumption $P_M$(t) of each motor at each time t is calculated by the following expression:

$$P_M(t) = I^2{}_m R_M$$

where $I_m$[A] represents the electric current (motor current) supplied to the motor.

FIG. 6B shows average power consumptions of the X-axis and Y-axis motors. The average power consumption of the X-axis is shown by a dotted line, and the average power consumption of the Y-axis is shown by a solid line. The average power consumption of each motor at each time t is defined as time-averaged power consumption from time 0 to time T. The average power consumption $P_{M\_AVERAGE}$(t) is calculated by the following expression:

$$P_{M\_AVERAGE}(T) = 1/T \int_0^T P_M(t)dt \ .$$

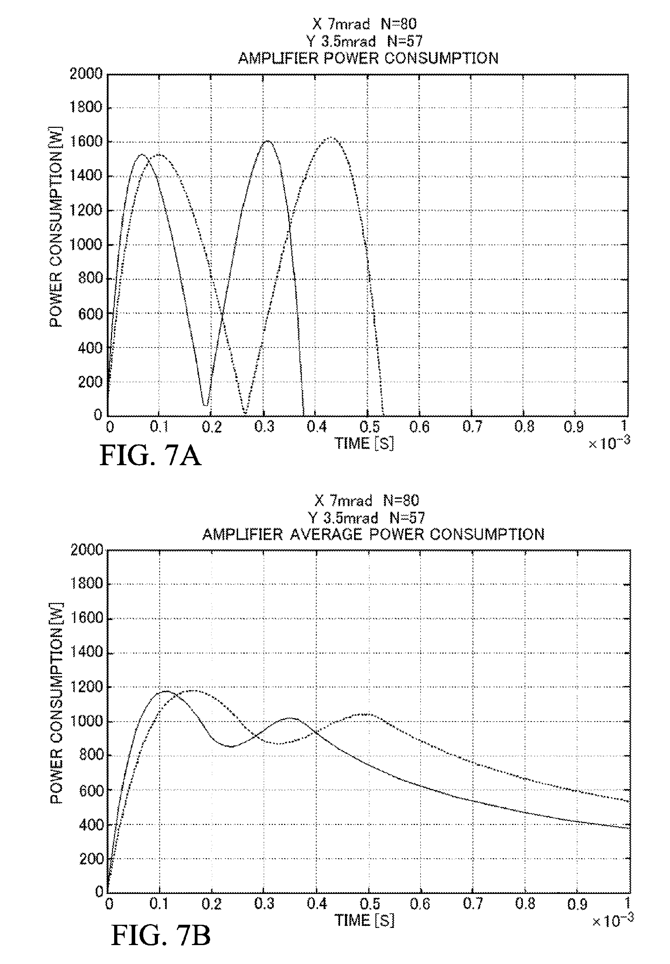

FIG. 7A shows power consumption of an electric current amplifier that supplies the electric current to the motor. Moreover, FIG. 7B shows average power consumption of the electric current amplifier. The power consumption of the electric current amplifier is calculated as follows.

FIG. 2 shows a configuration of the electric current amplifier. The electric current amplifier is placed at respective ends of the motor. The upper electric current amplifier in FIG. 2 supplies the motor current $I_m$ to the motor, and the motor current $I_m$ flows into the lower electric current amplifier in FIG. 2.

The power consumption Pp of the upper electric current amplifier is expressed as follows:

$$\mathtt{Pp=Icc\times(+Vs-(-Vs))+I_m\times(+Vs-Vp),}$$

and the power consumption Pm of the lower electric current amplifier is expressed as follows:

$$Pm = Icc \times (+Vs - (-Vs)) + I_m \times (+Vm - (-Vs))$$

where +Vs and -Vs represent power supply voltages of each of the electric current amplifiers, Vp represents an output voltage of the upper electric current amplifier, and Vm represents an output voltage of the lower electric current amplifier. Icc represents a circuit current that flows between +Vs and -Vs.

In the calculation of the consumption power, the circuit current Icc flowing from + Vs to -Vs is disregarded since the circuit current Icc is sufficiently smaller than $I_m$.

Moreover, Vp-Vm denotes a voltage between the ends of the motor, which is equal to a value obtained by multiplication of the motor current by impedance of the motor. Thus, Vp-Vm is expressed as follows:

$$Vp - Vm = I_m \times (Rm + jwLm).$$

Thereby, the power consumption $P_{AMP}(t)$ of the two electric current amplifiers is calculated by the following expression:

$$P_{AMP}(t) = I_m(2V_s - I_m(R_M + jwL_M)).$$

The average power consumption of the electric current amplifiers at each time t is defined as time-averaged power consumption of the electric current amplifiers from time 0 to time T. The average power consumption $P_{AMP\_AVERAGE}$ (t) is expressed as follows:

$$P_{AMP\_AVERAGE}(T) = 1/T \int_0^T P_{AMP}(t)dt.$$

Next, the power consumptions of the motor and the electric current amplifiers when the above-described positioning operation is continuously performed will be described. The following description will be made of a case where, on assumption that processing such as working and fabrication is performed in a state where the X-axis and Y-axis motors are stopped in a machine tool such as a laser beam machining apparatus, an operation in which the X-axis and Y-axis motors are stopped for a stop time of 100μsec after the positioning operation thereof is completed is continuously (repeatedly) performed.

As described above, when the X-axis positioning time Tx is 500μsec and the Y-axis positioning time Ty is 350μsec, the actual moving time of the X- and Y-axes (that is, time until the positioning operation thereof is completed) is 500μsec. A sum of the actual moving time and the stop time is 600μsec.

When the above-described operation is continuously performed, the average power consumptions of the X-axis motor and the Y-axis motor respectively become 27W and 18W, as shown as the average power consumptions at 600μsec in FIG. 6B. Similarly, the average power consumptions of the electric current amplifiers of the X-axis and the electric current amplifiers of the Y-axis respectively become 900W and 620W as shown in FIG. 7B.

In Condition 1, the X-axis positioning time Tx is 500μsec and the Y-axis positioning time Ty is 350μsec, the Y-axis positioning time Ty being 30 percent shorter than the X-axis positioning time Tx. Thus, this embodiment reviews the control law for the Y-axis as the following Conditions 2 to set a necessary and sufficient actual moving time within the X-axis positioning time Tx.

(Condition 2 relating to control laws)

The following control laws are applied to the X-axis and the Y-axis in the case where the angular movement amount of the X-axis is 7e-3rad and the angular movement amount of the Y-axis is 3.5e-3rad, which are the same movement amounts as those in Condition 1. A combination of the following control laws is referred to as Condition 2.

The movement of the X-axis is performed according to the following values:

initial state angular position x[0]=0rad;

final state angular position x[N]=7e-3rad;
sampling frequency=150KHz; and
final step number N=80.

The movement of the Y-axis is performed according to the following values:

initial state angular position x[0]=0rad;
final state angular position x[N]=3.5e-3rad;
sampling frequency=150KHz; and
final step number N=80.

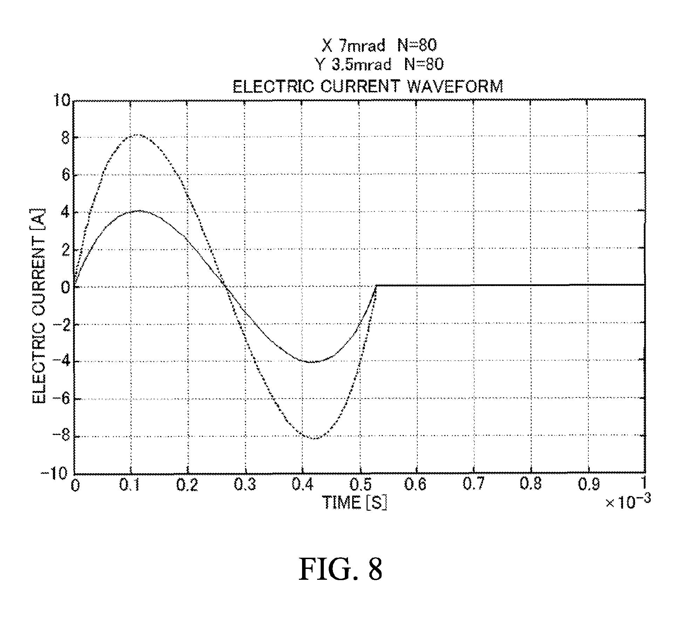

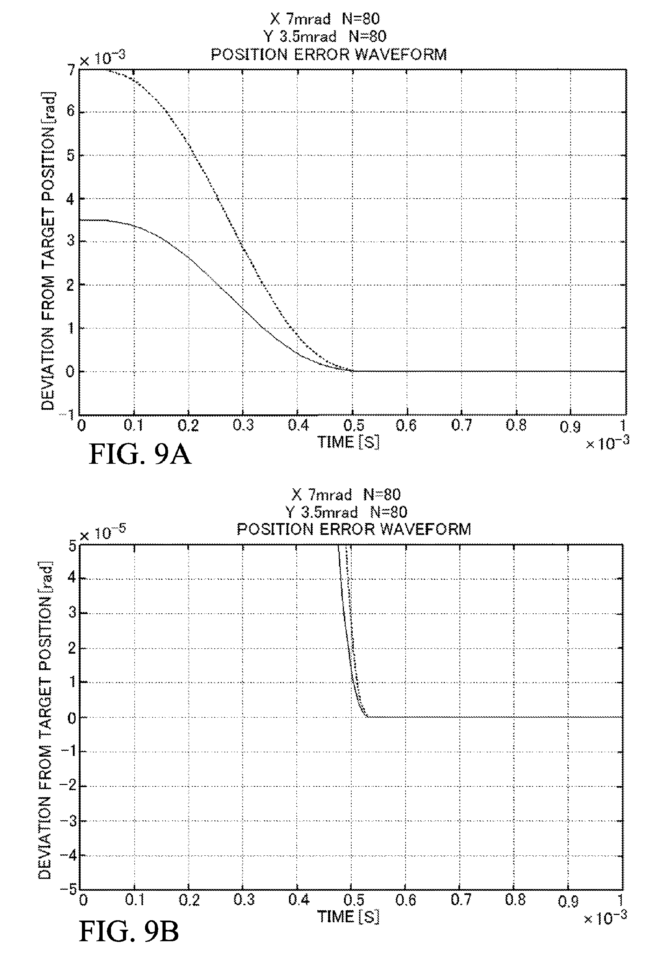

FIG. 8 shows time response waveforms of the motor currents of the X-axis and the Y-axis from a starting time of their movements to a finishing time at their target positions. The time response waveform of the X-axis is shown by a dotted line, and the time response waveform of the Y-axis is shown by a solid line. Moreover, FIG. 9A shows position error waveforms of the X-axis and the Y-axis from the starting time to the finishing time, and FIG. 9B shows enlarged parts of the position error waveforms in the vicinity of the target positions. The position error waveform of the X-axis is shown by a dotted line, and the position error waveform of the Y-axis is shown by a solid line. In FIGS. 9A and 9B, the horizontal axis shows time [$10^{-3}$ sec] and the vertical axis shows difference (deviation) of a current position from the target position.

When positioning precision required in the X-axis and the Y-axis is 20$\mu$rad, the X-axis and Y-axis positioning times Tx and Ty required for the movement at such positioning precision are, as shown in FIG. 9B:

$$Tx=500\mu sec$$

$$Ty=490\mu sec.$$

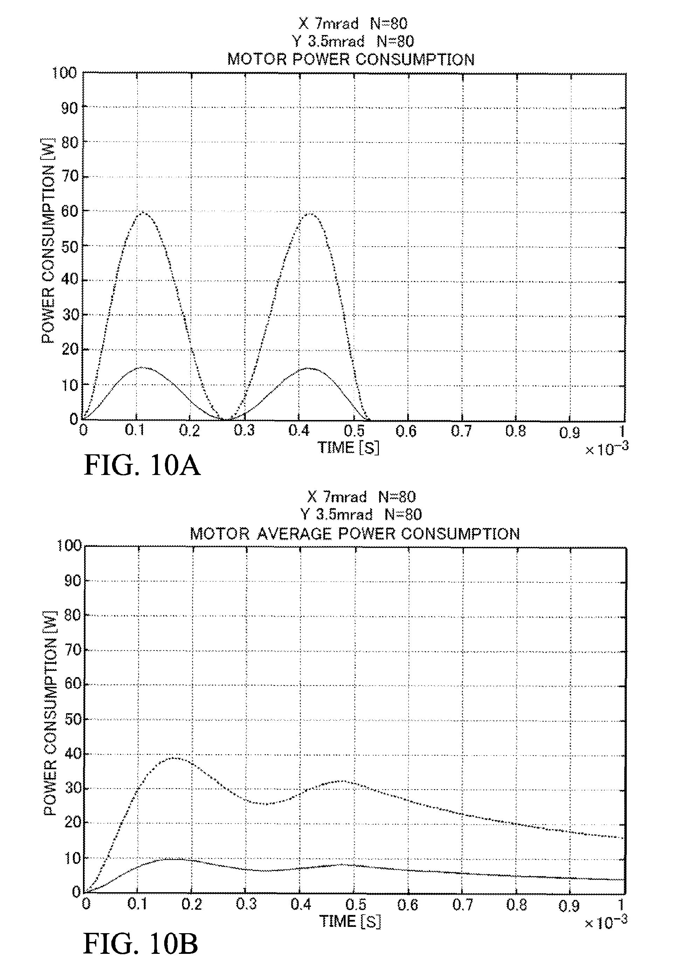

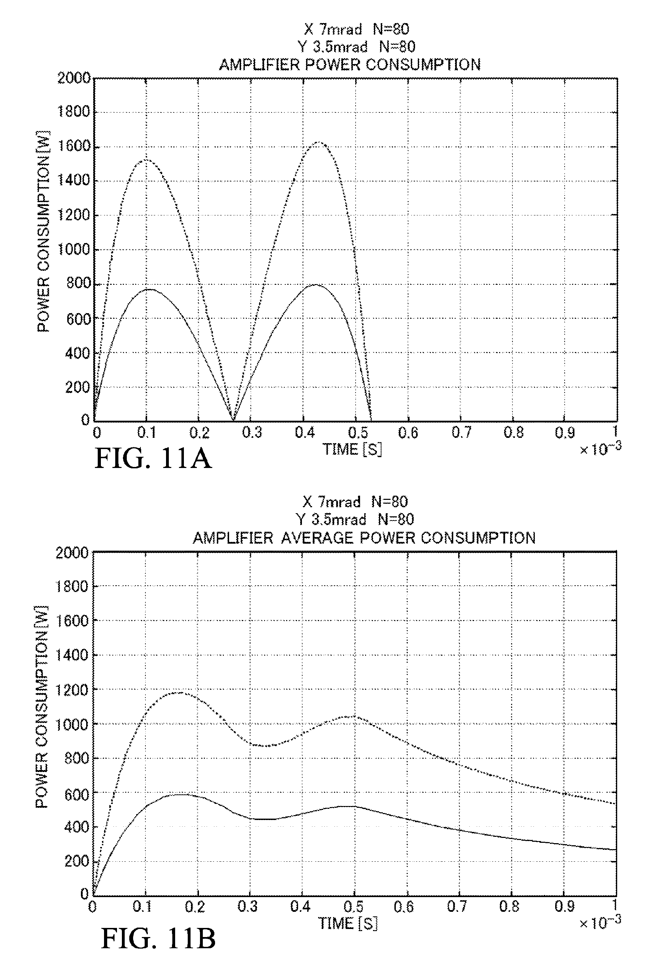

FIG. 10A shows power consumptions of the X-axis and Y-axis motors. FIG. 10B shows average power consumptions of the X-axis and Y-axis motors. FIG. 11A shows power consumption of the electric current amplifiers that supply the electric current to the motor. Moreover, FIG. 11B shows average power consumption of the electric current amplifiers.

Next, the power consumptions of the motor and the electric current amplifiers when the above-described positioning operation is continuously performed will be described. The following description will be made of a case where an operation in which the X-axis and Y-axis motors are stopped for a stop time of 100$\mu$sec after the positioning operation thereof is completed is continuously (repeatedly) performed.

As described above, when the X-axis positioning time Tx is 500$\mu$sec and the Y-axis positioning time Ty is 490$\mu$sec, the actual moving time of the X- and Y-axes (that is, time until the positioning operation is completed) is 500$\mu$sec. A sum of the actual moving time and the stop time is 600$\mu$sec.

When the above-described operation is continuously performed, the average power consumptions of the X-axis motor and the Y-axis motor respectively become 27W and 7W, as shown as the average power consumptions at 600$\mu$sec in FIG. 10B. Similarly, the average power consumptions of the electric current amplifiers of the X-axis and the electric current amplifiers of the Y-axis respectively become 900W and 450W as shown in FIG. 11B.

As described above, under Condition 1, the following average power consumptions are obtained:

X-axis motor average power consumption=27W;
Y-axis motor average power consumption=18W;
X-axis electric current amplifier average power consumption=900W; and
Y-axis electric current amplifier average power consumption=620W.

On the other hand, under Condition 2, the following average power consumptions are obtained:

X-axis motor average power consumption=27W;
Y-axis motor average power consumption=7W;
X-axis electric current amplifier average power consumption=900W; and
Y-axis electric current amplifier average power consumption=450W. Thus, employing the control laws of Condition 2 reduces, as compared with the case of employing the control laws of Condition 1, the average power consumption of the Y-axis motor from 18W to 7W and reduces the average power consumption of the Y-axis electric current amplifiers from 620W to 450W.

As described above, this embodiment sets, when the movement amounts (in other words, the target positions) of the X-axis and the Y-axis are different from each other, the actual moving time for both the X-axis and Y-axis motors (in other words, the final step number N used in design of the final-state control system) to a time corresponding to a longer one of the X-axis and Y-axis positioning times (the X-axis positioning time in this embodiment) than the other. This setting enables reduction of the power consumptions of the Y-axis motor and the Y-axis electric current amplifiers without extending the time required for the movements of the X-axis and Y-axis to the target positions, which results in suppression of heat generation in the Y-axis motor and the Y-axis electric current amplifiers.

Although this embodiment described the case where the biaxial motors (X-axis and Y-axis motors) are used as the first and second motors, triaxial or more multiaxial motors may be used. In this case, of the triaxial or more multiaxial motors, one motor whose positioning time is longest and the other two motors may be respectively regarded as the first motor and the second motors.

In addition, an alternative embodiment may be employed which produces beforehand a reference data table storing data of a relationship among moving amounts, positioning times (moving times) and control inputs for each of the X-axis and Y-axis motors under each of predetermined conditions relating to control laws, and switches the condition (control law) with reference to the reference data table according to a movement instruction (control input) for the X-axis and the Y-axis. In the design of the final-state control system, a calculation time for generating a waveform of the motor current instruction as the movement instruction is increased, which may become a problem when the calculation is performed in real time. However, producing the reference data table beforehand makes it possible to avoid such a problem.

Moreover, the control laws (conditions) to be switched are not limited to the above-described two control laws, and may be three or more control laws.

Furthermore, although this embodiment described the case where the X-axis and Y-axis motors have a same characteristic, the X-axis and Y-axis motors may have mutually different characteristics.

In addition, although this embodiment described the case where the X-axis and Y-axis motors are controlled with a same required positioning precision of $20\mu$rad, the X-axis and Y-axis motors may be controlled with mutually different required positioning precisions.

Second Embodiment

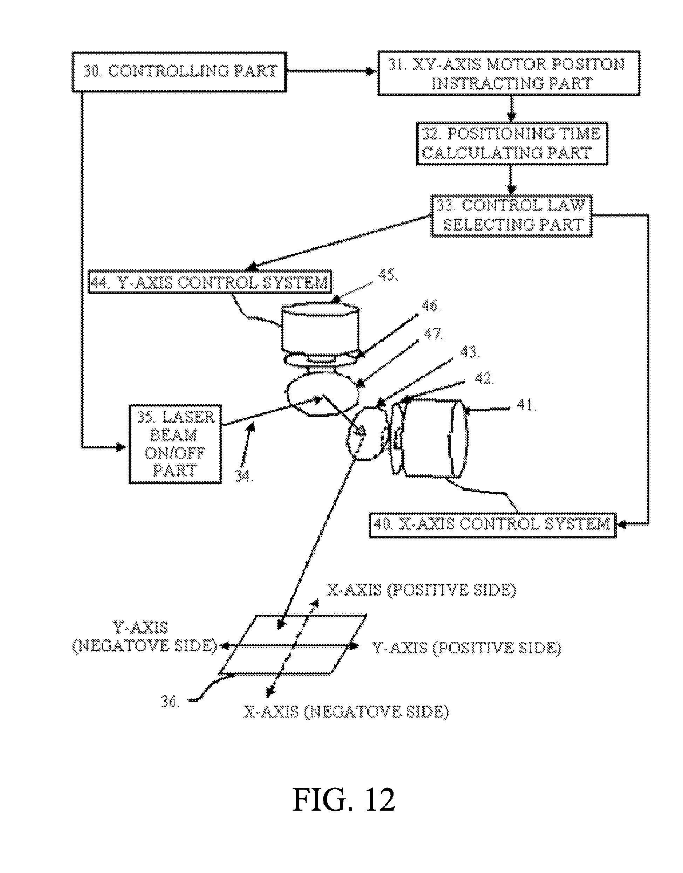

As a second embodiment (Embodiment 2) of the present invention, a laser beam machining apparatus that is a machine tool using the positioning control apparatus described in Embodiment 1 is shown in FIG. 12.

Reference numeral 41 denotes an X-axis motor (first motor), reference numeral 42 denotes an X-axis rotary encoder, and reference numeral 43 denotes an X-axis mirror (first driven member). Reference numeral 45 denotes a Y-axis motor (second motor), reference numeral 46 denotes a Y-axis rotary encoder, and reference numeral 47 denotes a Y-axis mirror (second driven member).

Reference numeral 30 denotes a controlling part of the laser beam machining apparatus, and reference numeral 31 denotes an XY-axis motor position instructing part that instructs target positions (moving amounts) of the X-axis and Y-axis motors 41 and 45. Reference numeral 32 denotes a positioning time calculating part that calculates positioning times required for positioning operations of the X-axis and Y-axis motors 41 and 45 (X-axis and Y-axis positioning times). Reference numeral 33 denotes a control law selecting part that selects control laws for the X-axis and Y-axis motors 41 and 45. Reference numeral 40 denotes a control system for the X-axis motor 41 (hereinafter referred to as an "X-axis motor control system"), and reference numeral 44 denotes a control system for the Y-axis motor 45 (hereinafter referred to as a "Y-axis motor control system").

The controlling part 30, the XY-axis motor position instructing part 31, the positioning time calculating part 32 and the control law selecting part 33 constitute a controller of the positioning control apparatus. Furthermore, the controller and the X-axis and Y-axis motor control systems 40 and 44 constitute the positioning control apparatus.

Reference numeral 34 denotes a processing laser beam, and reference numeral 35 denotes a laser beam ON/OFF part that emits the processing laser beam and stops the emission thereof. Reference numeral 36 denotes a processing surface on which an object to be processed is placed and subjected to laser beam processing.

The controlling part 30 provides target coordinates of a laser irradiation point on the processing surface 36 to the XY-axis motor position instructing part 31. The XY-axis motor position instructing part 31 calculates target angles of the X-axis and Y-axis motors 41 and 45 corresponding to target rotational positions of the X-axis and Y-axis mirrors 43 and 47 for moving the laser irradiation point to the target coordinates. Then, the positioning time calculating part 32 calculates the X-axis positioning time Tx and the Y-axis positioning time Ty.

The control law selecting part 33 selects the control law (condition) for the X-axis and Y-axis motors 41 and 45 according to a time length relationship of the positioning times Tx and Ty. Thereafter, the control law selecting part 33 inputs the selected control law and the target angle for the X-axis to the X-axis motor control system 40, and inputs the selected control law and the target angle for the Y-axis to the Y-axis motor control system 44.

The X-axis motor control system 40 controls the operation of the X-axis motor 41 while detecting its rotation angle through the X-axis rotary encoder 42. The X-axis mirror 43 is rotated by the X-axis motor 41 to move the laser irradiation point to the target coordinate in an X-axis direction. The Y-axis motor control system 44 controls the operation of the Y-axis motor 45 while detecting its rotation angle through the Y-axis rotary encoder 46. The Y-axis mirror 47 is rotated by the Y-axis motor 45 to move the laser irradiation point to the target coordinate in a Y-axis direction. The positioning operations of the X-axis and Y-axis motors 41 and 45, that is, the movement of the laser irradiation point to the target coordinates in the X-axis and Y-axis directions are finished (completed) at the same time.

After the laser irradiation point is thus moved to the target coordinates, the controlling part 30 turns the processing laser beam ON/OFF part 35 ON to cause it to emit the processing laser beam 34. This enables processing of the object to be processed which is placed on the processing surface 36.

The use of the positioning controlling apparatus described in Embodiment 1 for the laser beam machining apparatus of this embodiment enables reduction of power consumptions of the motors (and of the electric current amplifiers described in Embodiment 1) and suppression of heat generation therein, and further enables improvement of production capability (throughput) of the laser beam machining apparatus.

Although this embodiment described the case where the positioning controlling apparatus of Embodiment 1 is used for the laser beam machining apparatus, the positioning controlling apparatus may be used for positioning control of an XY stage that is driven by biaxial motors in a machine tool such as a semiconductor exposure apparatus or a drill boring machine. Of the XY stage, for example, a stage part corresponds to a first driven member and a driving source of an X-axis drive unit that drives the stage part in an X-axis direction corresponds to a first motor. Moreover, the X-axis drive unit corresponds to a second driven member, and a driving source of a Y-axis drive unit that drives the X-axis drive unit in a Y-axis direction corresponds to a second motor.

Furthermore, although each of the above embodiments described the cases of using two rotary motors as the X-axis and Y-axis motors, linear motors may be used as the X-axis and Y-axis motors, and a combination of a linear motor and a rotary motor may also be used.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. The positioning control apparatus includes a first motor (41) moving a first driven member (43), a second motor (45) moving a second driven member (47) and a controller (30-33) controlling the first and second motors so as to move the first and second driven members respectively to first and second target positions. The controller obtains a first moving time required for the first motor to move the first driven member to the first target position and a second moving time required for the second motor to move the second driven member to the second target position, and causes the first and second motors to concurrently operate during one of the first and second moving times longer than the other to move the first and second driven members respectively to the first and second target positions.

# Claims

1. A positioning control apparatus comprising:

   a first motor (41, 54) configured to move a first driven member (43);
   a second motor (45, 64) configured to move a second driven member (47); and
   a controller (51, 53, 61, 63, 30-33) configured to control operation of the first motor so as to move the first driven member to a first target position and configured to control operation of the second motor so as to move the second driven member to a second target position,
   **characterized in that** the controller is configured to obtain a first moving time (Tx) required for the first motor to move the first driven member to the first target position and a second moving time (Ty) required for the second motor to move the second driven member to the second target position, and that the controller is configured to cause the first and second motors to concurrently operate during one of the first and second moving times longer than the other to move the first and second driven members respectively to the first and second target positions.

2. The apparatus according to claim 1, further comprising:

   a data table storing data of a relationship among moving amounts, moving times and control inputs under each of a plurality of control laws with respect to each of the first and second motors (41, 54, 45, 64).

**3.** The apparatus according to claim 1 or 2, wherein the controller (51, 53, 61, 63, 30-33) is configured to perform a two-degree-of-freedom control for each of the first and second motors (41, 54, 45, 64).

**4.** A machine tool for machining an object, the tool comprising:

a first driven member (43);
a second driven member (47); and
a positioning control apparatus defined in any one of claims 1 to 3,
**characterized in that** the positioning control apparatus is configured to respectively move the first and second driven members to machine the object.

FIG. 1

FIG. 2

FIG. 3

FIG. 4

X 7mrad  N=80
Y 3.5mrad  N=57
POSITION ERROR WAVEFORM

FIG. 5A

X 7mrad  N=80
Y 3.5mrad  N=57
POSITION ERROR WAVEFORM

FIG. 5B

X 7mrad  N=80
Y 3.5mrad  N=57
MOTOR POWER CONSUMPTION

FIG. 6A

X 7mrad  N=80
Y 3.5mrad  N=57
MOTOR AVERAGE POWER CONSUMPTION

FIG. 6B

FIG. 7A

FIG. 7B

X 7mrad N=80
Y 3.5mrad N=80
ELECTRIC CURRENT WAVEFORM

FIG. 8

X 7mrad  N=80
Y 3.5mrad  N=80
POSITION ERROR WAVEFORM

FIG. 9A

X 7mrad  N=80
Y 3.5mrad  N=80
POSITION ERROR WAVEFORM

FIG. 9B

X 7mrad N=80
Y 3.5mrad N=80
MOTOR POWER CONSUMPTION

FIG. 10A

X 7mrad N=80
Y 3.5mrad N=80
MOTOR AVERAGE POWER CONSUMPTION

FIG. 10B

X 7mrad  N=80
Y 3.5mrad  N=80
AMPLIFIER POWER CONSUMPTION

FIG. 11A

X 7mrad  N=80
Y 3.5mrad  N=80
AMPLIFIER AVERAGE POWER CONSUMPTION

FIG. 11B

FIG. 12

## REFERENCES CITED IN THE DESCRIPTION

**Patent documents cited in the description**

- JP 2003329960 A

**Non-patent literature cited in the description**

- Nano-scale servo control. Tokyo Electrical Engineering College Publications Service, 174-178